# FASCICULE DE BREVET EUROPEEN

(11) **EP 2 794 265 B1**
(45) Date de publication et mention de la délivrance du brevet: **16.12.2015**
(21) Numéro de dépôt: 12816744.2
(22) Date de dépôt: 20.12.2012
(51) Int. Cl.: B32B 17/10, C03C 27/12, G02B 6/00, F21V 8/00, G02B 27/01, G02B 5/20

(54) **DISPOSITIF DE VISUALISATION D'UNE IMAGE SUR UN SUPPORT FEUILLETE**
VORRICHTUNG ZUR BETRACHTUNG EINES BILDES AUF EINEM LAMINIERTEN SUBSTRAT
DEVICE FOR VIEWING AN IMAGE ON A LAMINATED SUBSTRATE

(30) Priorité: 22.12.2011 FR 1162312
(43) Date de publication de la demande: 29.10.2014
(73) Titulaire: Saint-Gobain Glass France, 92400 Courbevoie (FR)
(72) Inventeur: LALUET, Jean-Yves, F-75019 Paris (FR); LECAMP, Guillaume, F-75018 Paris (FR)
(74) Mandataire: Douysset, Laurence
(86) Numéro de dépôt international: PCT/FR2012/053009
(87) Numéro de publication internationale: WO 2013/093351

(56) Documents cités:
- EP-A1- 1 793 261
- FR-A1- 2 578 797
- FR-A1- 2 929 016

## Description

L'invention se rapporte au domaine des systèmes de visualisation projetés sur des supports en verre feuilleté.

Une application de tels systèmes se situe notamment dans le domaine l'affichage sur vitrage et notamment dans le domaine de visualisation tête haute, encore appelé HUD ou Head Up Display. Ces systèmes permettent d'afficher des informations, par exemple des images, tout en permettant à l'observateur de regarder simultanément les images réelles l'entourant et les informations affichées. Ils sont utiles par exemple dans les cockpits d'avion, les trains ou dans les véhicules automobiles. Ainsi le conducteur peut visualiser l'information affichée, sans éloigner son regard du champ de vision en avant du véhicule.

Les systèmes de visualisation selon l'invention peuvent également être utilisés dans des applications de type bâtiment, si on souhaite utiliser des verres feuilletés à motifs éclairants offrant une fonctionnalité d'éclairage d'ambiance, d'appoint, décoratif ou informatif.

Classiquement, dans des applications dans le domaine de l'automobile, l'image supplémentaire est obtenue en projetant une information sur un pare-brise ayant une structure feuilletée, c'est-à-dire formé de deux feuilles de verre et d'une couche intercalaire en matière plastique.

Il existe différents types de système d'affichage d'informations visuelles, notamment utilisés pour l'aide à la conduite dans les véhicules.

Certains systèmes de vision « tête haute » projettent une image virtuelle qui se réfléchit sur le pare-brise et donne l'impression à l'utilisateur de voir l'image se former à l'avant du véhicule. D'autres systèmes projettent une image réelle et impliquent la présence d'espèces luminescentes dans la structure feuilletée. La couche de matériau luminescent absorbe un rayonnement situé dans le domaine de l'ultraviolet ou de l'infrarouge et réémet dans le visible. Les luminophores sont choisis en fonction de la longueur d'onde du rayonnement d'excitation incident. Lorsque la longueur d'onde est dans le domaine de l'UV, on parle de « down conversion ». Inversement, quand la longueur d'onde est dans le domaine de l'IR, on parle de « up-conversion ». L'image est réelle et se forme dans le plan du vitrage feuilleté.

Dans les systèmes d'aide à la conduite impliquant des espèces luminescentes (image réelle), deux variantes ont été décrites. La demande WO 02/058402 décrit un système HUD dans lequel la couche de matériau luminescent recouvre l'ensemble de la surface du pare-brise. Le message souhaité apparait en excitant localement les luminophores, à l'aide d'un système optique complexe doté d'un système directionnel du faisceau lumineux émis par la source UV/IR comprenant des galvanomètres ou micro-miroirs ou d'un système permettant la formation et la projection d'une image, comme par exemple une matrice LCD et des lentilles de relais. Ces systèmes d'éclairage sont encombrants et onéreux.

Dans l'autre variante décrite par exemple dans les demandes EP 1 793 261 ou FR 2 929 017, la couche de matériau luminophore est déposée localement, sous la forme de pictogrammes pré-imprimés qui sont ensuite éclairés par un système optique simple. L'inconvénient de ces pictogrammes pré-imprimés est, outre la complexité du dépôt du matériau luminophore, le fait que les molécules luminescentes ont tendance à migrer au sein de la couche intercalaire en polymère. En raison de cette migration, les contours des pictogrammes pré-imprimés deviennent flous, et avec le temps, les pictogrammes deviennent illisibles. D'autre part, les espèces luminescentes ont des durées de vie limitées et blanchissent plus ou moins sous l'effet des UV. Il est donc nécessaire d'utiliser des espèces luminescentes robustes, ce qui limite le nombre de composés exploitables.

D'autre part, ces différents systèmes décrits ci-dessus sont tels que les informations visuelles sont disposées sur des zones de surveillance du trafic routier, dans la partie claire ou transparente du pare-brise. Ils font donc courir un risque de défaut d'attention de la part du conducteur, qui pourrait se focaliser sur l'information affichée plutôt que sur les événements extérieurs. De plus, ces systèmes offrent, pour la plupart, un contraste insuffisant pour permettre une lecture correcte de l'information dans des conditions d'éclairage extérieur important. Pour pallier à ce problème, une solution consiste à équiper les systèmes de sources d'éclairage de grande puissance, du type laser UV, ce qui n'est pas sans danger à l'intérieur comme à l'extérieur des véhicules.

La demande WO 2009/122094 décrit un pare-brise feuilleté incorporant un dispositif de visualisation HUD dans lequel la couche de matériau luminophore, déposée sous la forme d'un pictogramme, est positionnée sur le pare-brise au niveau d'une couche de matériau opaque, en émail noir. Cette couche de revêtement noir est disposée derrière la couche de luminophores dans le sens de propagation du rayonnement incident et forme une couche absorbante des UV. Cette solution permet d'éviter toute fuite dangereuse du rayonnement incident dans ou en dehors de l'habitacle du véhicule. Elle permet également de prévenir toute dégradation des luminophores contre les radiations extérieures.

Toutefois, le dépôt de la couche de luminophore reste difficile à mettre en oeuvre puisqu'il doit être réalisé de façon à représenter d'un pictogramme. La migration des luminophores dans la couche intercalaire en matière plastique reste un problème qui provoque un brouillement de l'image imprimée : le pictogramme devient flou, notamment sous l'effet de fortes illuminations récurrentes, qui ont pour effet de porter périodiquement l'ensemble du vitrage à des températures très élevées.

La présente invention se propose de fournir un dispositif de visualisation sur un support feuilleté, permettant de répondre à l'ensemble des problèmes mentionnés précédemment, tout en étant à moindre coût.

La solution proposée permet de déporter les informations dans une zone spécifique du vitrage, où le contraste reste suffisant pour que l'information soit visible uniquement depuis l'intérieur sans nécessiter l'utilisation de sources excitatrices de lumière cohérente, de forte puissance, ou complexes car dotés de systèmes de contrôle directionnel du faisceau.

De plus, le choix des espèces luminescentes n'est plus dicté par leur rendement de conversion, leur durée de vie et leur affinité à diffuser. Il peut se faire sur la base de leur coût, de leur facilité d'utilisation et de la couleur générée.

Le dispositif d'éclairage selon la présente invention répond facilement aux exigences du cahier des charges dans le domaine de l'automobile en termes de compacité, résistance aux vibrations et aux variations de température et de prix.

Plus précisément, la présente invention se rapporte à un vitrage pour dispositif de visualisation, ledit vitrage comprenant un assemblage d'au moins :
- une première feuille extérieure transparente et une seconde feuille intérieure transparente, comprenant chacune une face externe et une face interne, lesdites feuilles en verre étant reliées entre elles par un intercalaire d'une matière thermoformable ou par un feuillet multicouche intégrant un tel intercalaire,
- une couche de protection en matériau opaque au contact de la face interne de la première feuille extérieure,
- une couche de masquage en matériau opaque au contact de la face interne de la seconde feuille intérieure, ladite couche de masquage comprenant des ouvertures formant des pictogrammes,
- une couche uniforme d'un matériau dopé en espèces luminescentes choisies pour absorber un rayonnement lumineux produit par la source génératrice d'un rayonnement dans le domaine de l'UV ou de l'IR et pour réémettre un rayonnement lumineux dans le domaine du visible, ladite couche uniforme étant disposée dans le vitrage, entre ladite couche de masquage et ladite couche de protection.

La face dite « interne » des feuilles constituant le vitrage est celle tournée vers l'intérieur de l'assemblage, par opposition à la face dite « externe » qui est celle tournée vers l'extérieur.

Sous le terme « uniforme », on comprend que le matériau dopé en espèces luminescentes est réparti sur la totalité de la couche.

Les « ouvertures formant des pictogrammes » sont des ouvertures pratiquées dans la couche de masquage dont la forme est ajustée au dessin recherché pour ledit pictogramme.

Avantageusement, la couche uniforme dopée en espèces luminescentes est constitué par l'intercalaire ou par une portion de l'intercalaire dans lequel ou laquelle les espèces luminescentes ont été intégrées.

Selon un autre mode de réalisation, la couche uniforme dopée est un film polymère dopé déposé sur un intercalaire non dopé, une couche barrière étant éventuellement placée entre le film dopé et l'intercalaire.

De façon préférée, la couche de masquage est située sur la face interne de la seconde feuille intérieure qui est au contact de l'intercalaire ou du feuillet multicouche. La couche de protection est située sur la face interne de la première feuille extérieure qui est au contact de l'intercalaire ou du feuillet multicouche.

La matière thermoformable constituant ledit intercalaire est choisie dans le groupe des butyrals de polyvinyle (PVB), des polychlorures de vinyl (PVC) plastifiés, du polyuréthane (PU) ou des éthylènes vinyle acétate (EVA).

La couche de masquage est une couche d'émail noir, une couche de peinture ou encre opaque, ou une couche de polymère teintée ou peinte, par exemple en polyéthylène, en polyméthacrylate de méthyle.

La couche de protection est une couche d'émail noir, une couche de peinture ou encre opaque, ou une couche de polymère teintée ou peinte, par exemple en polyéthylène, en polyméthacrylate de méthyle.

Avantageusement, la couche de masquage et la couche de protection sont constituées du même matériau.

Sans sortir du cadre de la présente invention, au moins une couche additionnelle fonctionnelle est éventuellement placée entre les deux feuilles transparentes en verre.

Cette couche fonctionnelle peut être une couche anti-reflet pour l'UV placée sur la seconde feuille intérieure, ou une couche réfléchissante pour l'UV placée sur la première feuille extérieure.

La source génératrice de rayonnement UV ou IR est une diode électroluminescente ou un réseau de diodes électroluminescentes. La source génératrice peut produire un éclairage direct sur l'assemblage de couches ou un éclairage par la tranche.

Lorsque l'éclairage est effectué par la tranche, de façon avantageuse, au moins une couche fonctionnelle en matériau dont l'indice optique est inférieur à l'indice optique de la couche dopée ou de l'intercalaire est placée entre les deux feuilles transparentes en verre.

L'invention se rapporte également à un dispositif de visualisation sur un vitrage du type feuilleté, ledit système étant constitué d'une source génératrice de lumière et du vitrage tel que précédemment décrit.

L'invention et ses avantages seront mieux compris à la lecture des modes de réalisation non limitatifs décrits ci après, en lien avec les figures suivantes.
La figure 1 représente une succession de couches constituant le dispositif selon la présente invention.
La figure 2 représente un pare-brise comprenant les informations visuelles projetées avec un dispositif selon la présente invention.

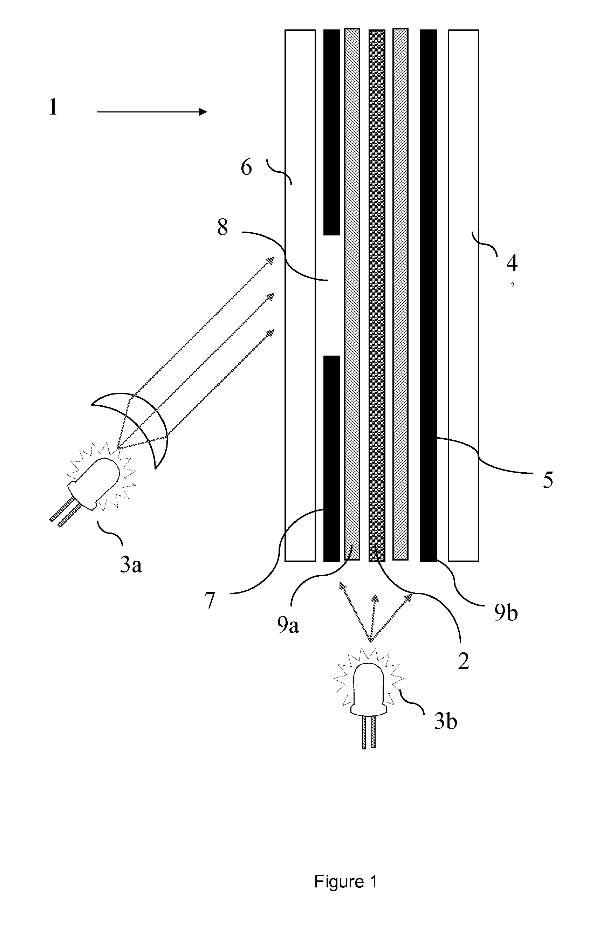

Sur la figure 1, on a schématisé un dispositif selon la présente invention, comprenant un assemblage de feuilles de verre 6 et 4 et une source génératrice de lumière (3a si l'éclairage est direct, 3b si l'éclairage se fait par la tranche).

Les feuilles de verre 4 et 6 peuvent être en verre inorganique ou organique, comme par exemple en polycarbonate.

Entre les deux feuilles de verre, est présent un feuillet intercalaire plastique 2 tel que du polyvinylbutyral (PVB), du polychlorure de vinyle (PVC) plastifié, du polyuréthane (PU) ou de l'éthylène acétate de vinyle (EVA), ou bien encore un feuillet thermoplastique multicouche intégrant le feuillet intercalaire et incorporant par exemple du polyéthylène téraphtalate (PET). La succession des couches d'un tel feuillet multicouche peut être par exemple PVB/PET/PVB.

Les luminophores utilisés dans le dispositif selon la présente invention sont les luminophores classiquement utilisés dans les applications de luminescence et sont choisis en fonction de la couleur souhaitée et de la source d'excitation utilisée. Tous les luminophores existants, connus pour répondre à une excitation UV (down conversion) ou à une excitation IR (up conversion) peuvent être choisis. De tels matériaux peuvent être choisis par exemple dans le domaine des luminophores inorganiques. On peut citer les oxydes, halogénures, chalcogénures, silicates, phosphates, borates, aluminates le plus souvent métalliques. Pour obtenir de la fluorescence, ces matériaux constituent des matrices dopées par au moins un élément choisi dans le groupe des terres rares, par exemple par Eu, Ce, Pr, Tb, Tm, Dy, Nd, Gd ou dans le groupe des métaux de transition, par exemple par Mn, Cr, Ti, Ag, Zn ou Cu.

Des luminophores de type colorant laser peuvent également être utilisés dans le cadre de la présente invention, ainsi que les polymères organiques. Il est aussi possible de sélectionner les luminophores dans le groupe des semiconducteurs nanométriques du type II-VI ou III-V, connus dans la technique sous le terme de boites quantiques (« quantum dots »).

Des molécules organométalliques peuvent également être utilisées comme luminophores dans le cadre de la présente invention. Elles sont par exemple constituées d'un centre de la fluorescence constitué par au moins un atome métallique ou un atome de terre rare, entourés par et liés à des groupements organiques.

Il est possible de n'utiliser qu'une seule espèce luminescente pour réaliser un éclairage monochromatique. Il est également possible d'utiliser des espèces luminescentes spatialement séparées pour obtenir un affichage monochromatique mais présentant plusieurs couleurs distinctes. Un mélange d'espèces luminescentes ayant éventuellement des bandes d'absorption distinctes peut permettre d'obtenir un affichage polychromatique.

A titre d'exemple, pour obtenir un affichage de la couleur bleue, on utiliser du 2,5-thiophenediylbis(5-tert-butyl-1,3-benzoxazole) ou du diéthyl 2,5-dihydroxytéréphtalate.

Pour une couleur rouge, on peut utiliser des complexes d'Eu³⁺ avec des ligands β-naphtoyltrifluoroacétone et pour une couleur verte, des dérivés de benzoxazinone.

Dans le mode de réalisation représenté sur la figure 1, la couche uniforme dopée selon l'invention est constituée par l'intercalaire. Un tel intercalaire constitué par un polymère dopé peut être communément obtenu par pulvérisation de l'espèce luminescente sur la surface de l'intercalaire non dopé, par trempage d'un intercalaire non dopé dans une solution contenant l'espèce luminescente, ou par mélange du polymère et de l'espèce luminescente avant extrusion de l'intercalaire.

Il est également possible, sans sortir du cadre de la présente invention et selon d'autres modes de réalisation non illustrés ici par des figures, de rapporter un film polymère dopé sur un intercalaire non dopé. Le film dopé et l'intercalaire peuvent éventuellement être séparés par une couche barrière, comme par exemple un film en polyéthylène téréphtalate (PET).

Sur la face interne de la feuille de verre 4 extérieure, une couche 5 de protection en matériau opaque a été déposée avant le feuilletage, c'est-à-dire avant l'assemblage des différents feuillets. Le rôle de cette couche de protection est triple : d'une part, elle constitue un fond noir vis-à-vis de la lecture des informations visuelles affichées et d'autre part, elle fait office d'écran bloquant vis-à-vis de la lumière extérieure, d'où son appellation « couche de protection ». Enfin, cette couche 5 de protection empêche également toute fuite du rayonnement UV incident vers l'extérieur. La couche de protection est nécessairement disposée derrière la couche qui contient les luminophores, dans le sens de propagation du rayonnement incident.

Grâce à la présence de cette couche, le contraste du dispositif d'affichage est excellent et l'information visuelle est visible même en cas d'éclairement extérieur important. L'information visuelle n'est pas lisible de l'extérieur et il est donc possible de proposer des couleurs d'affichage telles que le rouge, sans être confronté à un problème de réglementation. En outre, grâce à cette couche, il est possible de certifier que tout le rayonnement UV incident, notamment lorsqu'il est émis sous forme de rayonnement concentré (notamment par des diodes UV ou des lasers UV), est stoppé et reste confiné dans le vitrage.

La couche de protection est opaque et peut être en émail noir déposé sur la feuille de verre, en peinture ou encre optiquement opaque déposée sur l'intercalaire polymère ou en couche polymère opaque, teintée ou peinte, rapportée et feuilletée entre la feuille de verre extérieure 4 et l'intercalaire 2.

Le dépôt de la couche de protection se fait selon toute technique connue de l'homme de l'art.

Sur la face interne de la feuille de verre intérieure 6, une couche de masquage 7 en matériau opaque a été déposée avant le feuilletage. Cette couche 7 contient des ouvertures 8 formant des pictogrammes 11.

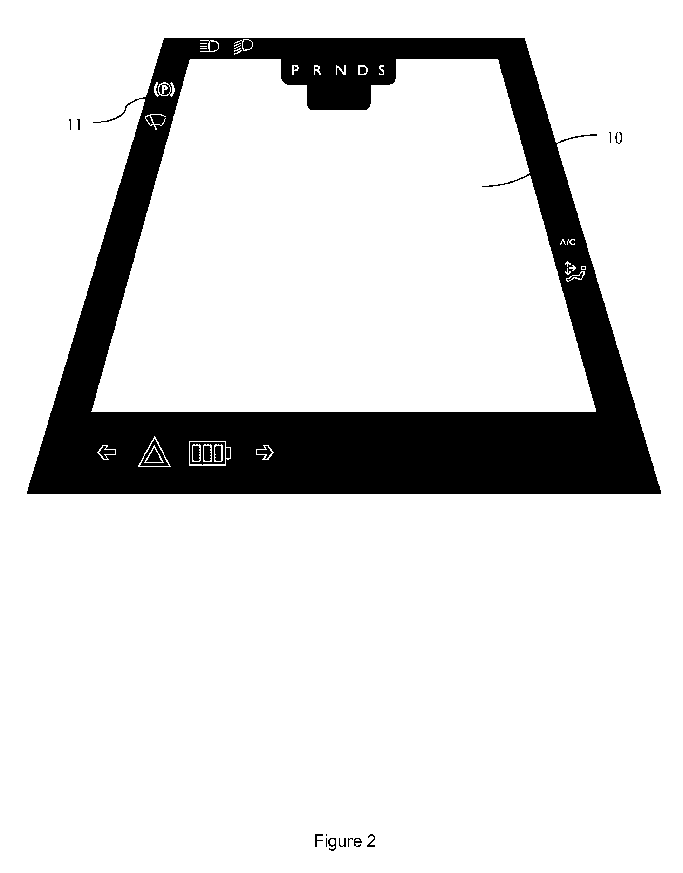

Par «ouvertures formant des pictogrammes», il est entendu au sens de la présente invention des ouvertures pratiquées dans la couche de masquage 7 dont la forme est ajustée au dessin recherché pour ledit pictogramme comme il est illustré par les figures 1 et 2. Ce sont en particulier des zones évidées (10, 11 sur la figure 2) de la couche de masquage, c'est-à-dire dépourvues du matériau de masquage (émail), et dont la forme correspond au dessin reconnu par le conducteur comme une information simple et immédiate lors de l'illumination de cette zone par le rayonnement UV incident, ladite zone évidée 10, 11 étant rétro-éclairée par la couche uniforme luminescente 2 sous jacente.

Par conséquent, l'information visuelle est portée par la couche de masquage. La couche de masquage est opaque et peut être en émail noir déposé sur la feuille de verre, en peinture ou encre optiquement opaque déposée sur l'intercalaire polymère ou en couche polymère opaque, teintée ou peinte, rapportée et feuilletée entre la feuille de verre intérieure 6 et l'intercalaire 2.

Le dépôt de la couche de masquage pour la représentation d'un pictogramme peut être réalisé selon toute technique connue de l'homme de l'art, par exemple, de façon non limitative, par les techniques de sérigraphie, les techniques du type jet d'encre ou encore les techniques du type offset, flexogravure ou encore héliogravure.

Les couches 9a et 9b sont des couches additionnelles fonctionnelles, qui peuvent être éventuellement présentes. Il est possible d'interposer entre les deux feuilles de verre une ou plusieurs couches présentant des propriétés spécifiques. Ainsi, une couche 9a d'un matériau connu comme antireflet pour la radiation excitatrice utilisée peut être insérée sur la seconde feuille de verre intérieure 6. Une couche 9b réfléchissante pour l'UV peut être placée sur la première feuille de verre extérieure 4.

Il est envisageable d'ajouter une couche fonctionnelle permettant d'améliorer l'extraction de la luminescence, en réalisant par exemple un empilement antireflet centré sur le pic d'émission du matériau luminescent, en contact avec la feuille de verre intérieure et /ou un empilement réfléchissant à cette longueur d'onde en contact avec la feuille de verre extérieure.

La couche fonctionnelle éventuellement présente peut permettre d'améliorer la visibilité de l'information visuelle, en réalisant un hologramme centré sur la longueur d'onde d'émission du matériau luminescent.

La succession de feuillets, en coupe, représentée sur la Figure 1 est la suivante : Feuille de verre extérieure 4/couche de protection 5/ couche fonctionnelle 9b (optionnelle)/intercalaire 2 dopé en espèces luminescentes/couche fonctionnelle 9a (optionnelle)/couche de masquage 7 comprenant des ouvertures 8/feuille de verre intérieure 6.

La source génératrice d'un rayonnement lumineux émettant dans l'UV ou l'IR et utilisée dans le dispositif selon la présente invention est avantageusement une source classique de faible puissance. Le coût et la sécurité du dispositif d'éclairage sont facilement maitrisables.

La source utilisée est préférentiellement une diode électroluminescente (LED) ou un réseau de diodes électroluminescentes. On pourra citer par exemples des LED émettant à 365, 385 et 405 nm. Il est envisageable d'utiliser comme système d'éclairage un réseau de plusieurs diodes, chacune étant éventuellement pilotable séparément.

Les pictogrammes peuvent ainsi être éclairés par une ou plusieurs LED. On peut choisir d'utiliser une optique de collimation.

Contrairement aux dispositifs d'éclairage dans les systèmes connus de l'art antérieur, il n'est pas utile d'utiliser un système complexe de contrôle directionnel du faisceau, ni d'éclairer l'information visuelle selon un angle prédéfini. Le dispositif d'éclairage présente l'avantage d'être très compact donc facilement intégrable, notamment dans l'habitacle d'un véhicule. Il est de plus très robuste et ne comprend ni composants fragiles ni composants mobiles.

La source excitatrice peut éclairer les pictogrammes de façon directe (cas de la source 3a).

Selon un mode de réalisation, la source 3b peut éclairer l'empilement des couches par la tranche. Avantageusement, dans cette configuration, une couche constituée d'un matériau à bas indice optique est placée entre les deux feuilles de verre pour améliorer le guidage de la lumière. La couche peut par exemple être une couche macroporeuse dont l'indice est compris entre 1,1 et 1,3, ou bien en plastique tel que du PET avec un indice inférieur à 1,5.

Le dispositif selon l'invention peut s'appliquer à tout support feuilleté. Dans le domaine de l'automobile, on peut l'utiliser pour des toits auto, des pare-brises, des fenêtres latérales feuilletées, des lames de verre classiquement utilisées pour les systèmes HUD classiques, des éléments de planche de bord en verre, etc.

Dans le cadre d'applications bâtiment, on peut utiliser l'invention sur des verres feuilletés présentant au moins une zone opaque : verres laqués, peints, émaillés, etc. Ces verres peuvent par exemple constituer une vitre, une façade, une cloison, une porte, une enseigne, une vitrine, un miroir, une étagère, une crédence, un plancher ou un plafond, un garde-corps, etc. Les applications possibles de pictogrammes fluorescents sont multiples : signalétique (repères, directions), publicité sur lieu de vente (logos), domotique (boutons de commande), éclairage décoratif ou d'ambiance.

La figure 2 représente un pare-brise 10 sur les bords duquel on projette l'information visuelle avec un dispositif selon la présente invention. Classiquement, les parties périphériques du pare-brise sont recouvertes d'un revêtement opaque en émail noir. Il est possible de placer des pictogrammes 11, au sens précédemment décrit, dans cette zone périphérique.

Avec le dispositif selon la présente invention, lorsque la source excitatrice est éteinte (état off), l'information est invisible.

## Revendications

1. Vitrage pour dispositif de visualisation (1), ledit vitrage comprenant un assemblage d'au moins :
- une première feuille extérieure transparente (4) et une seconde feuille intérieure transparente(6), comprenant chacune une face externe et une face interne, lesdites feuilles en verre étant reliées entre elles par un intercalaire (2) d'une matière thermoformable ou par un feuillet multicouche intégrant un tel intercalaire,
- une couche de protection (5) en matériau opaque au contact de la face interne de la première feuille extérieure,
- une couche de masquage (7) en matériau opaque au contact de la face interne de la seconde feuille intérieure, ladite couche de masquage comprenant des ouvertures (8) formant des pictogrammes (11),
- une couche uniforme d'un matériau dopé en espèces luminescentes choisies pour absorber un rayonnement lumineux produit par la source génératrice (3a, 3b) d'un rayonnement dans le domaine de l'UV ou de l'IR et pour réémettre un rayonnement lumineux dans le domaine du visible, ladite couche uniforme étant disposée dans le vitrage, entre ladite couche de masquage (7) et ladite couche de protection (5).

2. Vitrage selon la revendication précédente dans lequel la couche uniforme dopée est l'intercalaire (2) ou une portion de l'intercalaire dans lequel ou laquelle les espèces luminescentes ont été intégrées.

3. Vitrage selon la revendication 1 dans lequel la couche uniforme dopée est un film polymère dopé déposé sur un intercalaire (2) non dopé, une couche barrière étant éventuellement placée entre le film dopé et l'intercalaire.

4. Vitrage selon l'une des revendications précédente dans lequel la couche de masquage (7) est située sur la face qui est au contact de l'intercalaire (2) ou du feuillet multicouche.

5. Vitrage selon l'une des revendications précédentes dans lequel la couche de protection (5) est située sur la face qui est au contact de l'intercalaire (2) ou du feuillet multicouche.

6. Vitrage selon l'une des revendications précédentes dans lequel la matière thermoformable constituant ledit intercalaire (2) est choisie dans le groupe des butyrals de polyvinyle (PVB), des polychlorures de vinyl (PVC) plastifiés, du polyuréthane (PU) ou des éthylènes vinyle acétate (EVA).

7. Vitrage selon l'une des revendications précédentes dans lequel la couche de masquage (7) est une couche d'émail noir, une couche de peinture ou encre opaque, ou une couche de polymère teintée ou peinte, par exemple en polyéthylène, en polyméthacrylate de méthyle.

8. Vitrage selon l'une des revendications précédentes dans lequel la couche de protection (5) est une couche d'émail noir, une couche de peinture ou encre opaque, ou une couche de polymère teintée ou peinte, par exemple en polyéthylène, en polyméthacrylate de méthyle.

9. Vitrage selon l'une des revendications précédentes dans lequel la couche de masquage (7) et la couche de protection (5) sont constituées du même matériau.

10. Vitrage selon l'une des revendications précédentes dans lequel au moins une couche additionnelle fonctionnelle (9) est placée entre les deux feuilles transparentes en verre.

11. Vitrage selon la revendication précédente dans lequel la couche fonctionnelle est une couche anti-reflet pour l'UV placée sur la seconde feuille intérieure (6), ou une couche réfléchissante pour l'UV placée sur la première feuille extérieure (4).

12. Vitrage selon l'une des revendications précédentes dans lequel la source génératrice (3a, 3b) de rayonnement UV ou IR est une diode électroluminescente ou un réseau de diodes électroluminescentes.

13. Vitrage selon l'une des revendications précédentes dans lequel la source génératrice (3a) produit un éclairage direct sur l'assemblage de couches.

14. Vitrage selon l'une des revendications précédentes dans lequel la source génératrice (3b) produit un éclairage par la tranche.

15. Vitrage selon la revendication précédente dans lequel au moins une couche fonctionnelle en matériau dont l'indice optique est inférieur à l'indice optique de l'intercalaire est placée entre les deux feuilles transparentes en verre.

16. Dispositif de visualisation sur un vitrage du type feuilleté, **caractérisé en ce qu'**il est constitué d'une source génératrice de lumière et du vitrage selon l'une des revendications 1 à 15.

## Patentansprüche

1. Verglasung für Anzeigevorrichtung (1), wobei die Verglasung eine Anordnung umfasst aus mindestens
- einer ersten transparenten äußeren Scheibe (4) und einer zweiten transparenten inneren Scheibe (6), die jeweils eine Außenseite und eine Innenseite umfassen, wobei die Scheiben aus Glas durch eine Zwischenschicht (2) aus einem thermoformbaren Material oder durch eine Mehrlagenschicht, die eine solche Zwischenschicht integriert, miteinander verbunden sind,
- einer Schutzschicht (5) aus opakem Material, die mit der Innenseite der ersten äußeren Scheibe in Kontakt ist,
- einer Maskierungsschicht (7) aus opakem Material, die mit der Innenseite der zweiten inneren Scheibe in Kontakt ist, wobei die Maskierungsschicht Öffnungen (8) umfasst, die Piktogramme (11) bilden,
- einer gleichförmigen Schicht aus einem Material, das mit lumineszierenden Spezies dotiert ist, die ausgewählt sind, um einen Lichtstrahl zu absorbieren, der von der Quelle (3a, 3b) zum Erzeugen einer Strahlung im UV- oder IR-Bereich erzeugt wird, und um einen Lichtstrahl im Bereich des Sichtbaren zurückzusenden, wobei die gleichförmige Schicht in der Verglasung angeordnet ist, zwischen der Maskierungsschicht (7) und der Schutzschicht (5).

2. Verglasung nach dem vorhergehenden Anspruch, wobei die gleichförmige Schicht die Zwischenschicht (2) oder ein Teil der Zwischenschicht ist, in die oder in den die lumineszierenden Spezies integriert wurden.

3. Verglasung nach Anspruch 1, wobei die gleichförmige Schicht ein dotierter Polymerfilm ist, der auf eine nicht dotierte Zwischenschicht (2) aufgetragen ist, wobei eine Sperrschicht gegebenenfalls zwischen dem dotiertem Film und der Zwischenschicht platziert ist.

4. Verglasung nach einem der vorhergehenden Ansprüche, wobei die Maskierungsschicht (7) sich auf der Seite befindet, die mit der Zwischenschicht (2) oder der Mehrlagenschicht in Kontakt ist.

5. Verglasung nach einem der vorhergehenden Ansprüche, wobei die Schutzschicht (5) sich auf der Seite befindet, die mit der Zwischenschicht (2) oder der Mehrlagenschicht in Kontakt ist.

6. Verglasung nach einem der vorhergehenden Ansprüche, wobei das thermoformbare Material, das die Zwischenschicht (2) bildet, ausgewählt ist aus der Gruppe der Polyvinylbutyrale (PVB), der plastifizierten Polyvinylchloride (PVC), Polyurethan (PU) oder der Ethylenvinylacetate (EVA).

7. Verglasung nach einem der vorhergehenden Ansprüche, wobei die Maskierungsschicht (7) eine Schicht aus schwarzem Email, eine Schicht aus Lackfarbe oder opaker Tinte oder eine gefärbte oder lackierte Polymerschicht, ist, zum Beispiel aus Polyethylen, aus Polymethylmethacrylat.

8. Verglasung nach einem der vorhergehenden Ansprüche, wobei die Schutzschicht (5) eine Schicht aus schwarzem Email, eine Schicht aus Lackfarbe oder opaker Tinte oder eine gefärbte oder lackierte Polymerschicht, ist, zum Beispiel aus Polyethylen, aus Polymethylmethacrylat.

9. Verglasung nach einem der vorhergehenden Ansprüche, wobei die Maskierungsschicht (7) und die Schutzschicht (5) aus dem gleichen Material gebildet sind.

10. Verglasung nach einem der vorhergehenden Ansprüche, wobei mindestens eine zusätzliche funktionelle Schicht (9) zwischen den zwei transparenten Scheiben aus Glas platziert ist.

11. Verglasung nach dem vorhergehenden Anspruch, wobei die funktionelle Schicht eine für die UV-Strahlung antireflektierende Schicht ist, die auf der zweiten inneren Scheibe (6) platziert ist, oder eine für die UV-Strahlung reflektierende Schicht ist, die auf der ersten äußeren Scheibe (4) platziert ist.

12. Verglasung nach einem der vorhergehenden Ansprüche, wobei die Quelle (3a, 3b) zum Erzeugen einer UV- oder IR-Strahlung eine Leuchtdiode oder ein Netz aus Leuchtdioden ist.

13. Verglasung nach einem der vorhergehenden Ansprüche, wobei die erzeugende Quelle (3a) eine direkte Beleuchtung auf der Anordnung aus Schichten erzeugt.

14. Verglasung nach einem der vorhergehenden Ansprüche, wobei die erzeugende Quelle (3b) eine Beleuchtung durch die Kante erzeugt.

15. Verglasung nach dem vorhergehenden Anspruch, wobei mindestens eine funktionelle Schicht aus einem Material, dessen optischer Index kleiner ist als der optische Index der Zwischenschicht, zwischen den zwei transparenten Scheiben aus Glas platziert ist.

16. Vorrichtung zur Anzeige auf einer Verglasung des Verbundverglasungstyps, **dadurch gekennzeichnet, dass** sie von einer Quelle zur Erzeugung von Licht und von der Verglasung nach einem der Ansprüche 1 bis 15 gebildet ist.

## Claims

1. Glazing panel for a display device (1), said glazing panel comprising an assembly of at least:
- an external first transparent pane (4) and an internal second transparent pane (6), each pane comprising an external face and an internal face, said glass panes being joined together by an interlayer (2) made of a thermoformable material or by a multilayer sheet incorporating such an interlayer;
- a protective layer (5) made of an opaque material making contact with the internal face of the external first pane;
- a masking layer (7) made of an opaque material making contact with the internal face of the internal second pane, said masking layer comprising apertures (8) forming pictograms (11); and
- a uniform layer of a material doped with luminescent species chosen because they absorb light radiation produced by the source (3a, 3b) generating radiation in the UV or IR range, and re-emit light radiation in the visible range, said uniform layer being placed in the glazing panel, between said masking layer (7) and said protective layer (5).

2. Glazing panel according to the preceding claim, in which the doped uniform layer is the interlayer (2) or a portion of the interlayer, the luminescent species being incorporated in said interlayer or said portion of the interlayer.

3. Glazing panel according to Claim 1, in which the doped uniform layer is a doped polymer film deposited on an undoped interlayer (2), a barrier layer optionally being placed between the doped film and the interlayer.

4. Glazing panel according to one of the preceding claims, in which the masking layer (7) is located on that face which makes contact with the interlayer (2) or multilayer sheet.

5. Glazing panel according to one of the preceding claims, in which the protective layer (5) is located on that face which makes contact with the interlayer (2) or multilayer sheet.

6. Glazing panel according to one of the preceding claims, in which the thermoformable material forming said interlayer (2) is chosen from the group consisting of polyvinyl butyrals (PVBs), plasticized polyvinyl chlorides (PVCs), polyurethane (PU) or ethylene vinyl acetates (EVAs).

7. Glazing panel according to one of the preceding claims, in which the masking layer (7) is a black enamel layer, a coat of paint, a layer of opaque ink, or a layer of a tinted or painted polymer such as polyethylene or polymethyl methacrylate, for example.

8. Glazing panel according to one of the preceding claims, in which the protective layer (5) is a black enamel layer, a coat of paint, a layer of opaque ink, or a layer of a tinted or painted polymer such as polyethylene or polymethyl methacrylate, for example.

9. Glazing panel according to one of the preceding claims, in which the masking layer (7) and the protective layer (5) are made of the same material.

10. Glazing panel according to one of the preceding claims, in which at least one additional functional film (9) is placed between the two transparent glass panes.

11. Glazing panel according to the preceding claim, in which the functional film is a UV antireflection layer placed on the internal second pane (6), or a UV reflective layer placed on the external first pane (4).

12. Glazing panel according to one of the preceding claims, in which the source (3a, 3b) generating the UV or IR radiation is a light-emitting diode or an array of light-emitting diodes.

13. Glazing panel according to one of the preceding claims, in which the generating source (3a) directly illuminates the layer assembly.

14. Glazing panel according to one of the preceding claims, in which the generating source (3b) produces illumination via the edge face.

15. Glazing panel according to the preceding claim, in which at least one functional layer, made of a material having a refractive index that is lower than the refractive index of the interlayer, is placed between the two transparent glass panes.

16. Device for generating a display on a laminated glazing panel, **characterized in that** it consists of a source for generating light, and of the glazing panel according to one of Claims 1 to 15.
